Europäisches Patentamt

European Patent Office

Office européen des brevets

(11) Publication number: **0 266 014**
**A1**

## (12) EUROPEAN PATENT APPLICATION

(21) Application number: 87202083.9

(22) Date of filing: 29.10.87

(51) Int. Cl.⁴: **G06F 15/06** , **G06F 15/66**

(30) Priority: 31.10.86 NL 8602764

(43) Date of publication of application:
**04.05.88 Bulletin 88/18**

(84) Designated Contracting States:
**AT BE CH DE ES FR GB GR IT LI LU NL SE**

(71) Applicant: **Stichting voor de Technische Wetenschappen**
**Van Vollenhovenlaan 661 P.O. Box 3021**
**NL-3502 GA Utrecht(NL)**

(72) Inventor: **Duinker, Willem**
**Louis Saalbornlaan 61**
**NL-3584 GA Utrecht(NL)**

(74) Representative: **van der Beek, George Frans et al**
**Nederlandsch Octrooibureau Johan de Wittlaan 15 P.O. Box 29720**
**NL-2502 LS 's-Gravenhage(NL)**

(54) **Interconnection network for a system of synchronously operating arithmetical and logic operation units.**

(57) For the interconnection of a synchronously operating single-instruction, multiple data SIMD system with a processor at one or more levels of an asynchronously operating multiple-data MIMD system, an efficient and application-independent interconnection network is provided which increases the flexibility in the programming and application possibilities of SIMD systems. To achieve optimum processing speed the interconnection network comprises a hardware implementation of a finite-state machine.

fig-1

EP 0 266 014 A1

# Interconnection network for a system of synchronously operating arithmetical and logic operation units.

The present invention relates to an interconnection network for supporting the data and control information input and output processes with a system of synchronously operating arithmetical and logic operation units.

For real-time adaptive control of industrial processes and many other applications including radar control, satellite photography and robotics, systems are often necessary which, in order to perform a desired function, must be capable of processing a large number of data. In, for example, systems for image processing in industrial robots, a large amount of image information (pixels) produced by, for example, one or more cameras will have to be processed, inter alia, for object recognition, distance determination, positioning etc.

For an efficient and rapid processing of said image information, both a degree of preprocessing of the "rough" data (data reduction) and also the performance of decision support functions on said preprocessed (reduced) data are frequently necessary. In the first case the detection of certain general characteristics such as shapes and patterns of an object by digital filtration from the image information may be thought of, while decision-making algorithms are necessary for object recognition or positioning.

It will be clear that other applications will each require their own specific forms of data processing, but that such a functional splitting into a preprocessing phase and a decision-making phase can virtually always usefully be made for processing large amounts of data.

In this connection, the preprocessing phase is in general characterized by the repeated performance of a number of relatively simple arithmetical or logic operations on the data or a part thereof, for which purpose only a limited sequence of instructions and a small number of program branches or address operations will be necessary. For this purpose, for example, the system of synchronously operating arithmetical and/or logic operation units mentioned in the introduction is particularly suitable.

For the decision-making phase, the situation is, however, quite different. In this there is a need for associative and deductive functions which are characterized by intensive address computations for, inter alia, conditional decisions and exchange of process data. For this purpose, for example, a hierarchical processing system with various decision levels may be employed.

Systems for digitally processing data in one or more processes proceeding simultaneously so that precisely the same operation is performed in each process at each instant are known in computer engineering as so-called "single-instruction, multiple data" SIMD systems. Said systems are preeminently suitable for carrying out preprocessing functions on the data. Systems in which several per se different processes are performed digitally non-simultaneously and optionally independently of each other are known in computer engineering as so-called "multiple-instruction, multiple-data" MIMD systems. These systems are best suited to the autonomous interactions such as are encountered in physical processes.

The necessary decision-making functions and control for the image-processing system mentioned by way of example may be performed, inter alia, with an MIMD system, while an SIMD system may be used for filtering and other data preprocessing.

In the past such a hierarchical system for digital signal processing has been embodied by means of different decision-making levels, for which purpose (up to ten) so-called "general purpose" processors have been used which are interconnected with each other via dual-port memories and in this manner form an MIMD system. For more information reference is made to the article written by L.O. Hertzberger entitled "The Fast Amsterdam Multiprocessor (FAMP) System", Computer Physics Communications, vol. 26 (1982) pages 79-97.

In this connection, a problem for, inter alia, image processing is, however, presented by the lack of processing capacity in order to perform the necessary data preprocessing. Said MIMD system is therefore not readily suitable for instantaneous image signal processing of, for example, industrial robots and will have to be extended for this purpose to one or more levels having an SIMD system.

Most of the SIMD systems known in practice consist in general of a two-dimensional array of digitally interconnected, relatively simple, for example one-bit, synchronously operating arithmetical and/or logic operation units, with one or more local data memories and control logic. One of the matrix dimensions is usually related to the width of the data path or the word width of the data to be processed. The array can be either bit-parallel or bit-serial organized. In a bit-parallel organized array, the elements of, for example, two data vectors to be added to each other have to be read in in parallel, while in a bit-serial organized array the separate vector elements have to be read in serially. A bit-serial organization appears to provide better possibilities for increasing the processing capacity of the system and for implementation in the so-called "very large scale integration" (VLSI) technology (see, inter alia, Lyon, R.F., "A Bit-Serial VLSI Architectural Methodology for Signal Processing") IN VLSI 81, published by Gray, Academic Press, 1981. It will be clear that an SIMD system, because of its limited set of instructions and synchronous processing is capable of being simpler in design than an MIMD system.

In order to be able to embody an optimal and efficient system for digital signal processing, it is therefore necessary to interactively connect one or more of the asynchronously operating processors at the various levels of an MIMD system to one or more synchronously operating SIMD systems. Asynchronously operating is understood to mean that the response of the processor is not fixed when viewed in time. This is in contrast to a synchronously operating system in which the response of the system is indeed fixed when viewed in time.

For such an interconnection it is necessary to fulfil a number of necessary functional conditions, the most important problems which have to be solved being:

i) the manner of combined operation between an SIMD system and the programmable devices (processors) which support the data processing and exchange in the MIMD system, inter alia, with respect to the treatment of status-dependent parameters and the processing of instruction loops;

ii) the definition of the type of channel over which the data has to be exchanged with the SIMD system (serial/parallel: synchronized or unsynchronized);

iii) the mapping of the data on the total system, and also the data exchange between elements of said system;
and

iv) communication and synchronization between the various levels (processes) in the system.

From the following it will be clear that these problems can in general only be solved effectively if, between an SIMD system and a processor of the MIMD system, a separate interconnection network is included with which real-time application-independent exchange of data and control information is possible between these systems.

For the controlling and programming of the SIMD systems known in practice, which are constructed as an array of synchronously operating arithmetical and logic operation units, a hardware support is necessary for, inter alia, the linking up and correct sequence of instructions and addressing of the local data memories of the array and the possibility of responding to those signals which provide information over the instantaneous status in which the array is running (busy, free, etc.). In practice it is known that such a hardware support is embodied by means of a microcontroller or microsequencer.

It is possible to support programme branches, conditional branches and counters for controlling instruction loops with many microcontrollers available commercially. In this case, the instructions are fetched from a separate "Read Only Memory" (ROM) or "Random Access Memory" (RAM), the content of which is either permanently established or is loaded via a host computer. Some microcontrollers even have an arithmetical and/or logic processing unit for performing address computations and functions such as interrupt handling and conditional decisions.

A big disadvantage of microcontrollers is presented, however, by the lack of possibilities for performing the address computation necessary in the various, for example bit-serial, calculation operations for the local data memories associated with the array. This means that many instruction loops have to be extended, which again implies that extended memories are necessary for the storage of the microcode. The extension of the microcode, moreover, implies that the system programming is largely application-dependent and becomes obscure for the users, as a result of which difficulties will unavoidably arise if a user attempts to optimize such a system.

A further disadvantage is presented by the fact that, to programme the instructions in a higher program language, a conversion program and an external computer support system are necessary. Because the microcontroller fetches the instructions from a ROM or RAM, no interactive control is possible between a processor of, for example, an MIMD system and the SIMD system. The microcontroller, as it were, shields the SIMD system from the outside world, which makes, particularly, the solution of the problems mentioned under i and ii difficult.

The problems mentioned under i to iv incl. can therefore be most efficiently solved by controlling such an SIMD system not with a microcontroller as known in practice, but by means of one or more processors, for example microprocessors.

It is, however, not readily possible to connect such processors to such an SIMD system. The communication between the SIMD system and the processor will have to be mutually matched and synchronized. As a rule, the data to be processed by the system and originating from the processor will require matching, for example, conversion from bit-parallel to bit-serial organized data representation or vice versa.

For this purpose, known data exchange techniques using processors such as, inter alia, "Memory Mapped IO" in which the input and output parts for the communication with the processor are addressed in the same manner as memory locations have in practice proved too slow to exchange large data flows such as those on which the SIMD system has, in particular, to carry out its operations. For the data exchange with an SIMD system under the control of a processor, a separate interconnection network is therefore necessary.

The object of the present invention is therefore to indicate the manner in which it is possible to embody an interconnection network with which the disadvantages discussed of the known control systems can be avoided and with which, in an efficient manner, the requirements mentioned previously for interconnecting an SIMD system to a processor at one or more levels of an MIMD system can be fulfilled.

After studies of application algorithms to be carried out by SIMD systems such as, inter alia, indicated in "Higher efficiency for parallel processors" by E. Cloud and W. Holsztynski, IEEE SOUTHCON 1984, it has emerged that, for data operations such as shift operations, additions, subtractions and logic operations in, for example, bit-serial organized arrays of bit processors, as a rule a limited number of fixed identical subsequences of microinstruction words is encountered in which, for each subsequent instruction, it is only necessary to increase the addresses of the local data memories of the array. In addition to these fixed, non-status-dependent data operations, in a real operational situation it is of course necessary to perform also a number of variable, status-dependent operations which relate to the results of the data operations such as branching, conditional branches, interrupt handling and processing of the status information of the array.

The present invention therefore now provides an interconnection network for supporting the data and control information input and output process with a system of synchronously operating arithmetical and logic operation units, which network is characterized in that the interconnection network comprises at least two functionally separate subnetworks, of which a first subnetwork provides at least the address operations, status-dependent decisions and process synchronization necessary for controlling the system and data transfer and of which a second sub-network provides at least the non-status-dependent control functions including fixed instruction loops, memory addressing and the data input and output and synchronization to the system, the functions of the first subnetwork being assigned to at least one processor and the second subnetwork being formed so as to achieve as optimum a processing speed as possible by a hardware implementation of a finite-state machine.

As a result of the splitting into functionally separate subnetworks for at least, on the one hand, the address operations, branching, conditional decisions, process synchronization and communication with other processing units which are necessary for the data processing and which functions are the most suitable for assigning to a processor and at least, on the other hand, the hardware support system for the fixed instruction loops, the address control of the system and the data input and output and synchronization for the system to achieve an optimum processing speed, an efficient and simple-to-programme interconnection network is provided which increases the flexibility in the free programming and, as a result of its application-independent structure, the application possibilities of SIMD systems.

The combined operation necessary within the interconnection network between the subnetworks is in a preferred embodiment of the present invention implemented in a manner such that the subnetworks operate according to a master-slave configuration, the at least one processor functioning as master and the finite-state machine functioning as slave, which performs the assigned tasks independently and reports the completion thereof to the master.

The tasks to be assigned to the at least one processor may, as a result of this, advantageously be accommodated in a processor of an MIMD system to which the SIMD system has to be interconnected.

In the preferred embodiment of the interconnection network, the finite-state machine comprises a memory unit and counter unit, connected to the appropriate connections of the system, for respectively storing and, if necessary, repeatedly presenting instructions for the data processing and a latching unit ("latches") for addressing the local data memories of the system, which units are programmed under the control of the at least one processor, and a memory unit for storing the status information of the system.

If the SIMD system is built up from a bit-serial organized array and the data exchange has to proceed via a conventional bit-parallel organized processor, a parallel/series or series/parallel data path conversion is necessary. A further embodiment of the interconnection network according to the present invention is characterized in that the interconnection network further comprises a conversion unit for data path conversion to feed data to the system in bit-serial form and to convert the data delivered by the system to a bit-parallel representation for communication with the at least one processor or an external data memory.

If the interconnection network, for example, forms part of a processing unit of an MIMD system, according to an embodiment of the present invention, the functions of the first subnetwork may be performed by a processor which has a coprocessor interface which is interconnected in a manner such that the system functions as coprocessor under the control of the at least one processor via the finite-state machine. In this case, the finite-state machine may furthermore contain latches for processing the command words from the processor.

With a view to simplifying the programming and transparency of the overall network, instead of a processor with a coprocessor interface, yet a further embodiment of the interconnection network according to the present invention has been provided which is characterized in that the functions of the first subnetwork are performed by two mutually interconnected transputers, the first transputer providing at least the process synchronization and the support necessary for the data processing to the second subnetwork and the second transputer supporting at least the data transfer to the second subnetwork.

In computer engineering, the term "transputer" is understood to mean microprocessors which, on one and the same chip have, in addition to the arithmetical and logic operation unit, also a certain amount of working storage and memory and the control networks necessary for it, and also external communication networks.

Yet a further embodiment is characterized in that the second transputer operates together with the conversion unit for data path conversion in a manner such that the data transfer between the conversion unit and an external data memory can take place under the control of a direct memory access unit ("Direct Memory Access Controller").

If desired, according to yet a further embodiment of the present invention, the first subnetwork may comprise a further transputer interconnected with the other transputers and the second subnetwork to support the response signals to the process instructions.

Two embodiments of an interconnection network according to the present invention will be explained in more detail below by reference to the drawings.

Figure 1 shows a simplified block diagram of an interconnection network according to the present invention for a bit-serial organized SIMD system in which use is made of a processor with a coprocessor interface.

Figure 2 shows a simplified block diagram of an interconnection network for a bit-serial organized SIMD system in which use is made of transputers.

Figure 3 shows an extended block diagram of a practical implementation of an interconnection network according to Figure 1.

Figure 4 shows the internal structure of a single processor of a so-called "Geometric Arithmetic Parallel Processor" (GAPP) array manufactured by NCR Corporation which is used in a practical implementation of the embodiment according to Figure 1 as SIMD system.

Figure 5 shows how the various processors according to Figure 4 form the GAPP array.

Figure 6 shows diagrammatically the various connections of the GAPP array according to Figure 5.

Figures 7A-B and 8 each show in part a practical implementation of an interconnection network according to the block diagram of Figure 3.

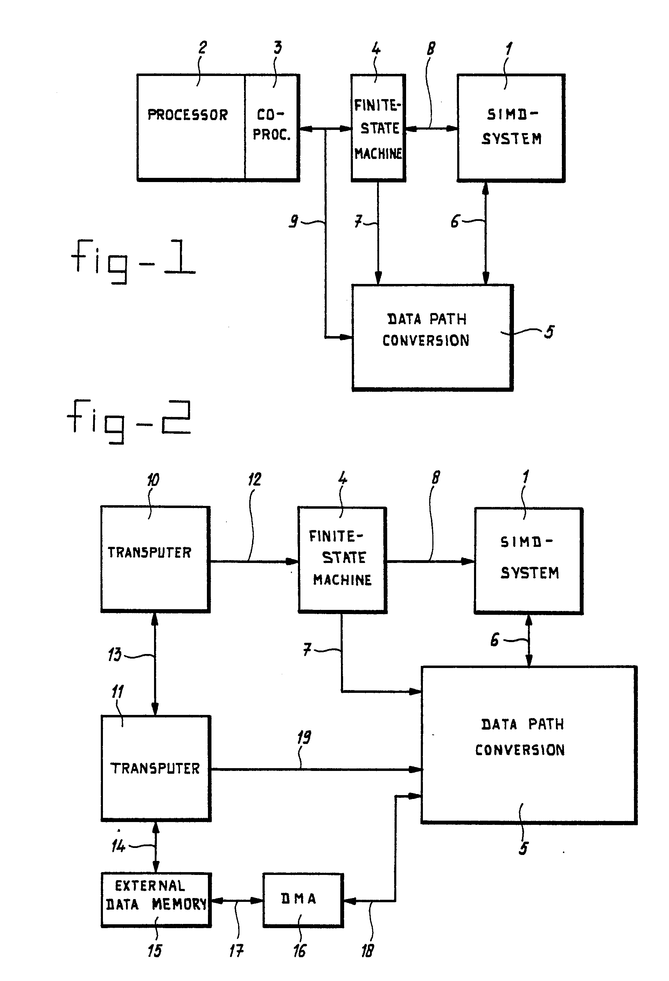

In the simplified block diagram shown in Figure 1 of an embodiment of the interconnection network according to the present invention, so so-called bit-serial organized SIMD system 1 is presumed. The interconnection network is in this case formed by the processor 2, which is provided with a coprocessor interface which is indicated by 3 for illustration, and the finite-state machine 4. Because a bit-serial array is assumed, the use of a data path conversion unit 5 is necessary in order to convert the serial data to and from the SIMD system 1 into words of bits arranged in parallel.

The data transfer to and from the SIMD system 1 takes place over the connection indicated by 6 using the conversion unit 5 and is synchronized by the finite-state machine 4 via the control line 7. The instructions and addresses necessary for the data processing and also the status information of the system travel over the connection indicated by 8 between the finite-state machine 4 and the SIMD system 1. The communication between the finite-state machine 4, the data path conversion unit 5 and the coprocessor 3 takes place via the common connection 9.

Because of the synchronous operation of the SIMD system, the data input and output processes of the system proceed synchronously. This is in contrast to the data exchange with the processor, which has an asynchronous character. For the sake of simplicity background memories for storing the processing program and the data, which are of course necessary for the operation of the processor, are not shown.

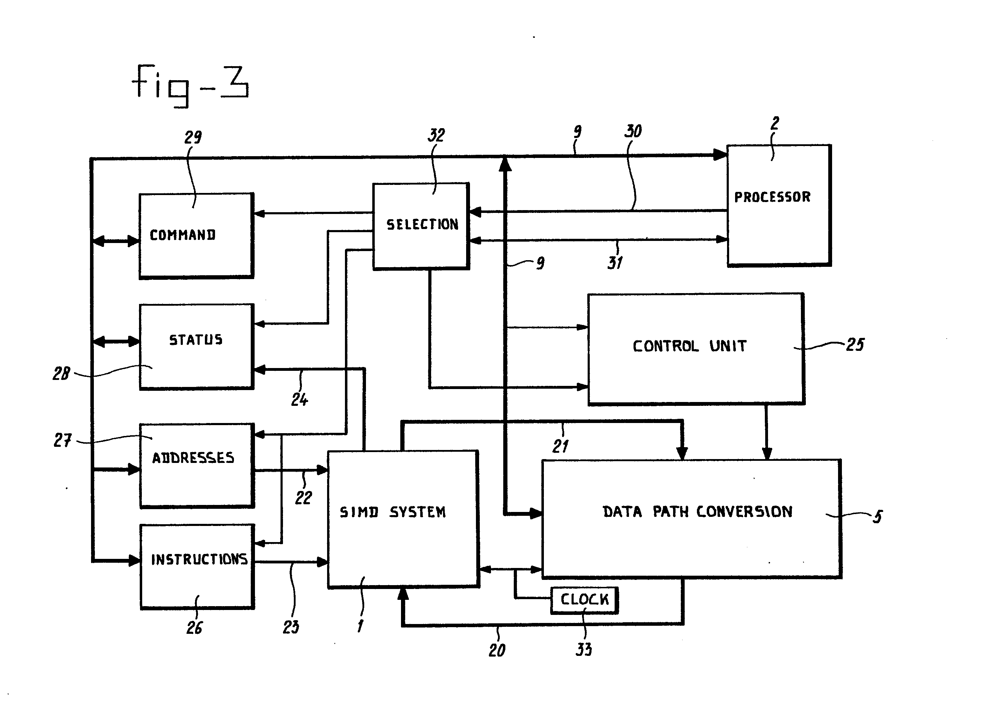

As a departure from Figure 1, in Figure 2 use is made of two so-called transputers 10, 11, which both fulfill a part of the processor functions of the interconnection network.

The first transputer indicated by 10 in Figure 2 mainly provides the functions necessary for the synchronization of the data input and output processes and supports the finite-state machine via the asynchronous connection 12 as regards the instructions necessary for the data processing to be carried out by the SIMD system 1, etc.

The second transputer 11 interconnected with the first transputer 10 via the asynchronous connection 13 supports the transfer of data to and from the data path conversion unit 5. Said data is stored in the external data memory 15 interconnected with the transputer 11 via the connection 14. The connection between the data path conversion unit 5 and the external memory 15 incorporates a so-called direct memory access controller 16 with which processed and unprocessed data can be exchanged between the external memory and the data path conversion unit via the connections 17, 18. The transputer 11 provides the synchronization necessary for this with the data path conversion unit 5 via the asynchronous connection 19.

The interconnection with a processing unit of, for example, an MIMD system can take place (not shown) via one or both transputers 10, 11 but also via the external memory 15. It is obvious that one or both transputers 10, 11 may also form part of an MIMD system.

The finite-state machine 4 can be constructed both in Figure 1 and in Figure 2 in virtually the same manner because the implementation thereof is closely connected with the SIMD system, i.e. the instructions and signals needed for the control thereof.

Although it is not shown, in the interconnection network according to Figure 2 a third transputer may suitably be connected with the other components for the processing of the various response signals to the process instructions which are generated by the SIMD system and the other transputers. The signals thereof may then be involved in the process synchronization, for example, via the first transputer 10.

A practical embodiment of the interconnection network according to Figure 1 will now be described below in more detail. For this purpose, reference should first be made to the block diagram shown in Figure 3. As SIMD system 1, use is made in this case of the previously mentioned GAPP array which comprises a two-dimensional array of 1-bit processors and a local data memory (RAM). The operating instruction, which is the same for each processor is run through in a specific cycle. The type of operation which such an SIMD system is usually expected to carry out is:

    i) data transfer;
    ii) arithmetical operations, and
    iii) logic operations.

The transfer of data to and from the SIMD system 1 takes place over bit-serial data communication buses, the input bus 20 and the output bus 21 respectively of the system.

Arithmetical operations are performed in a bit-serial manner, the data being fetched from the local array memory or originating from adjacent processors in the array. As a result of the bit-serial processing, the instruction loops for the individual bits are always the same, while the memory address is a variable parameter. The addresses and instructions are fed to the SIMD system 1 via the address lines 22 and the control lines 23 respectively. The status (state) of the SIMD system 1 can be accessed on the status line 24.

According to the present invention, the higher level, status-dependent, control functions, including address operations, branching, conditional decisions, interrupt handling, and process synchronization for data exchange with the SIMD system 1 are assigned to the processor 2. In relation to the non-status-dependent control of the SIMD system 1 necessary for the bit-serial data operations, the other components shown in the block diagram form a hardware implementation of a so-called finite-state machine.

By means of said finite-state machine, the data processing can be carried out by the SIMD system independently and asynchronously with respect to the processor 2, which processor has a coprocessor interface in this embodiment. This coprocessor interface is understood to mean a mechanism for extending the processing possibilities of the (main) processor, for example for defining new instructions such as, in the case of the present invention, for performing special data operations. The finite-state machine must then be designed so that the SIMD system can operate as coprocessor under the control of the main processor.

The functions to be performed by the hardware implementation of such a finite-state machine mainly comprise the presentation to the SIMD system 1 of the data to be processed, the instruction loops, the memory addresses and the processing of the status information from the SIMD system. Because the data from and to the processor 2 is transferred as usual via a parallel-data bus 9, data path conversion is necessary as already remarked because the SIMD system 1 has bit-serial data communication buses, which data path conversion feeds the data exchanged with the processor 2 via the parallel-data bus 9 to the SIMD system 1 via the input bus 20 in bit-serial form, or it deposits the data emitted by the SIMD system 1 via the output bus 21 in bit-serial form on the data bus 9 in parallel form. Said data path conversion is achieved by the data path conversion unit 5 with the associated control unit 25.

The finite-state machine comprises, furthermore, a memory and counter unit 26 for storing and, if necessary, repeatedly presenting instructions for the data processing via the control lines 23 to the SIMD system 1, latches 27 for addressing the local data memory of the SIMD system 1 via the address lines 22 and a memory unit 28 for processing status information from the SIMD system presented via the status lines 24. The units 26, 27 and 28 are connected to the data bus 9 for exchanging control information with the processor 2. The command words associated with the data exchange with the processor 2 are processed in separate latches 29.

To select the separate units of the finite-state machine with which the processor requires to communicate, a selection unit 32 is provided which is connected to the processor via address lines 30 and control lines 31 and which generates the necessary response signals to the processor instructions. Said selection unit 32 is connected with each of the separate components of the finite-state machine via selection lines. It is necessary to use such a selection unit 32 if, as in this embodiment, only a single processor is used. Furthermore the synchronization and autonomy with respect to the processor operation required for the SIMD system 1 and the data pad conversion unit 5 in regard to the data input and output of the SIMD system can be brought about via a clock circuit 33. Instead of the clock circuit 33, information intended for synchronization can also be exchanged via a separate connection (not shown) between the control unit 25 and the memory unit 26.

While an operation is being carried out by the SIMD system, steps must be taken to ensure that the asynchronous data transfer from and to the data path conversion unit is collected by a functional component suitable for this purpose, such as, for example, a so-called first in/first out (FIFO) memory unit which can advantageously be incorporated in the data path conversion unit.

Before discussing a specific embodiment of the interconnection network according to the present invention indicated diagrammatically in Figure 3, the structure of a GAPP array used in this practical embodiment, which array may be regarded as indicative of the present state of the art, is first discussed for the sake of clarity.

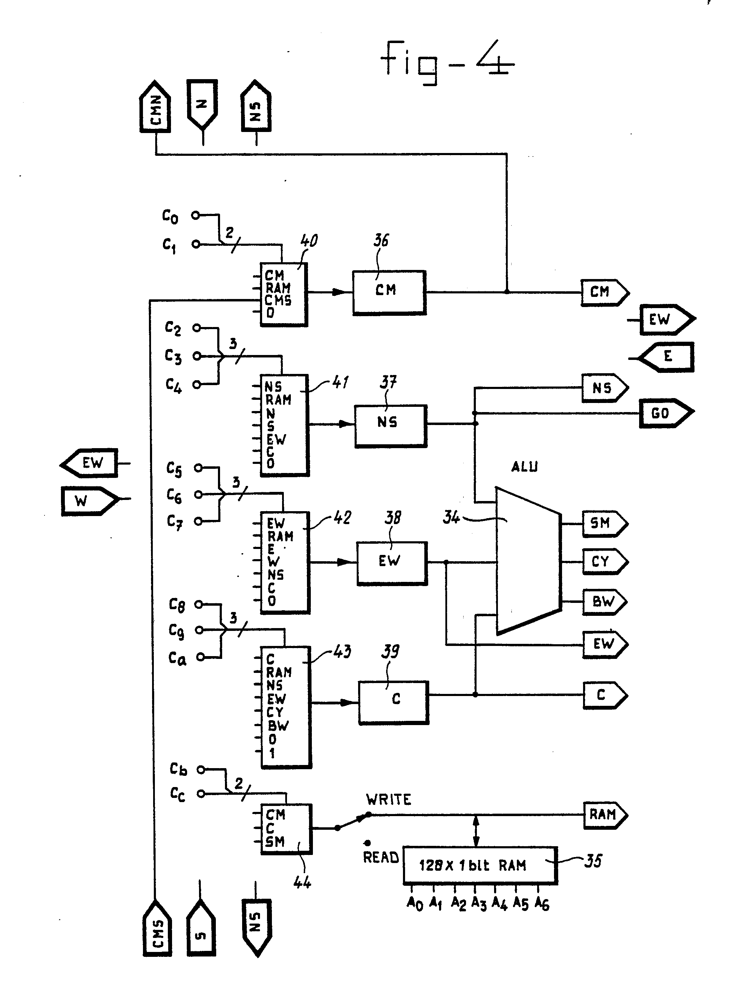

Figure 4 shows the internal structure of one single processor in the array. The processor is provided with a complete adder/subtracter 34, a random access memory 35, four registers 36 to 39 inclusive and five multiplexers 40 to 44 inclusive. The multiplexers 40 to 44 inclusive are each controlled in the manner illustrated by one or more of the control lines $C_0$ to $C_c$ inclusive in a manner such that a desired input of the multiplexers is interconnected to one of the registers 36-39 or to the memory 35. The connections between the output connections CN, NS, SM, CY, BW, EW, CM, RAM and the similarly named inputs of the various registers 40 to 44 inclusive have been omitted in Figure 4 for the sake of clarity. Along the four edges of the circuit, the various input/output connections are shown in the frames with thick outlines, which connections are interconnected inside the circuit of Figure 4 with all the points which are indicated by similarly named reference characters. These connection lines have also not been shown in Figure 4 for the sake of clarity. In addition to these various input/output connections, the address lines $A_0$ to $A_6$ inclusive of the RAM memory 35 are also fed to the outside.

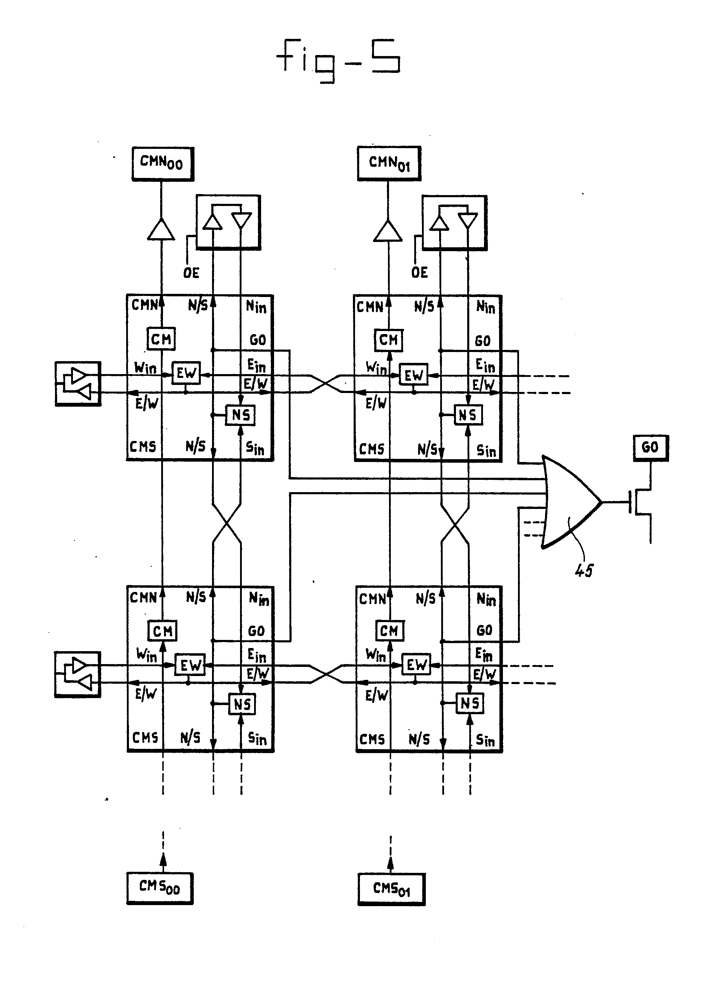

Figure 5 indicates how the various processors have been interconnected to form an array. If an east side, south side, west side and north side are defined for each of the processors, then it is evident from this figure that, for each processor, the connection EW on the east side is interconnected with the connection W on the west side of the adjacent processor, the connection EW on the west side is interconnected with the connection E on the east side of the adjacent processor, the connection CMN on the north side is interconnected with the connection CMS on the south side of the adjacent processor, the connection NS on the north side is interconnected with the connection S on the south side of the adjacent processor and the connection NS on the south side is interconnected with the connection N on the north side of the adjacent processor. In the case of the peripheral processors, a loop connection can be brought about in the manner illustrated by connecting the EW output with the W input on the west side or with the E input on the east side, while the NS output is connected with the N input on the north side or the S input on the south side. As is evident from the figure, this produces an array with a series of inputs $CMS_{00}$, $CMS_{01}$, ... and a series of outputs $CMN_{00}$, $CMN_{01}$, ... for the input and output of data. From each processor, the output connection GO is fed to an OR port 45 which combines said outputs to form one output connection GO as indicated diagrammatically in this figure. This GO connection provides the status information of the array.

In addition to said input and output connections and status information connection, the address lines $A_0$ .. $A_6$ of all the processors in the array are combined and fed to an external connection. The same applies to the control lines $C_0$ to $C_c$ inclusive which are accessible in a combined manner via external connections.

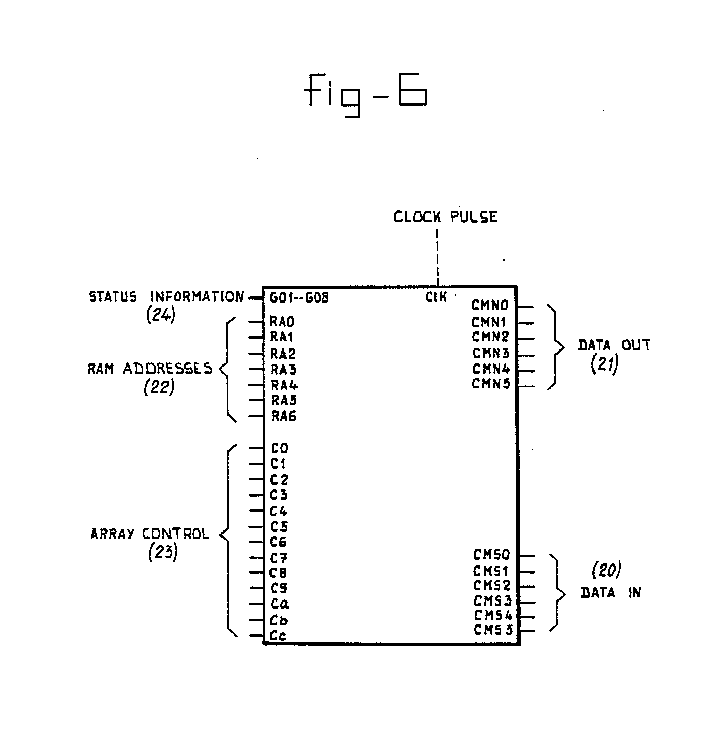

Figure 6 shows diagrammatically the array with the input and output connections. On the right-hand side the DATA OUT outputs CMNO to CMN5 inclusive and the DATA IN inputs CMSO to CMS5 inclusive can be seen. On the left-hand side the RAM address inputs RAO to RA6 inclusive and the array control inputs CO to Cc inclusive, and also the status information outputs G01 to G08 inclusive have been drawn. At the top a clock pulse input Clk is also present. For further details regarding this array of processors, reference is made to, for example, the information sheet for chip type NCR54cg72 produced by the NCR Corporation.

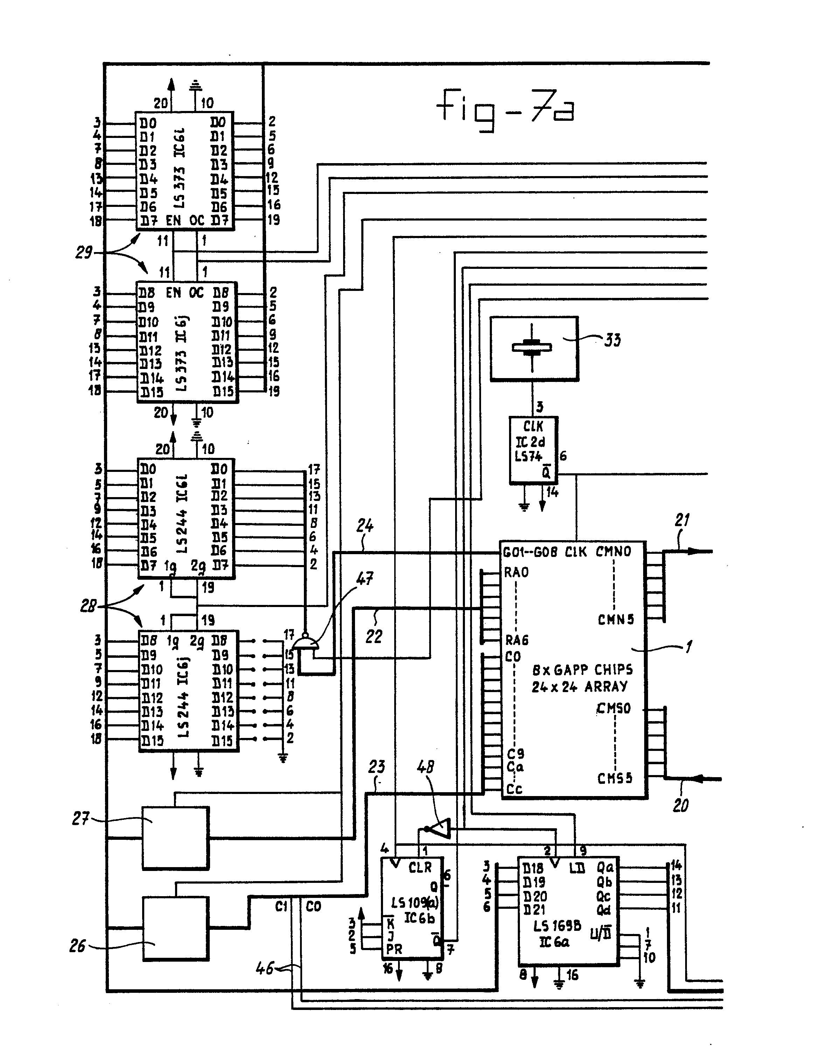

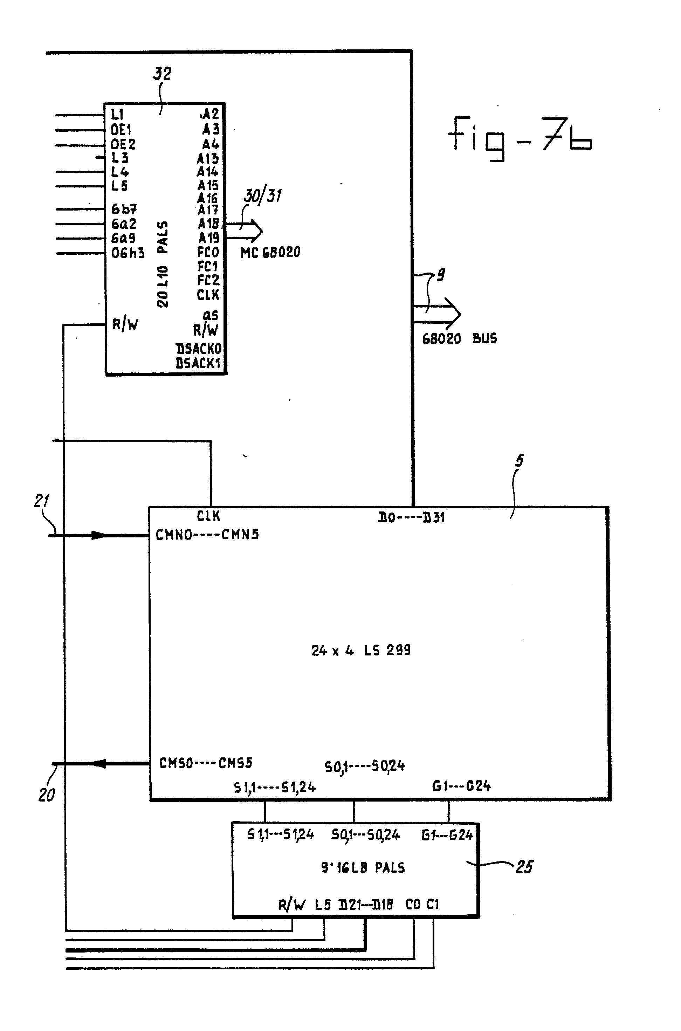

A practical implementation of the system according to the invention is shown in Figures 7A and 7B. The right-hand side of Figure 7A connects to the left-hand side of Figure 7B. As in Figure 3, the processor array in Figure 7 is indicated by 1. This array has been built up as a $24 \times 24$ array of one-bit processors with the aid of eight of the GAPP chips of the type NCR54cg72 discussed above. The connections indicated for the processor array 1 correspond to those as shown in Figure 6. As processor, use is made of a general-purpose microprocessor of the type MC68020 manufactured by Motorola, which microprocessor is not shown in Figure 7. In the Figure, the type indications of the separate chips under which the respective chips are available commercially are indicated. For each of the chips, the connections are indicated with the conventional reference symbols for these chips.

The Motorola MC68020 chip has a coprocessor interface as discussed above, with which the processor array can operate as coprocessor of the MC68020 via the hardware implementation of the finite-state machine of the interconnection network according to the present invention. The MC68020 processor can itself form part of a level of an MIMD system, for example the FAMP system for signal processing mentioned in the introduction.

The data path of the MC68020 processor has a width of 32 bits. The common data bus 9 also has a width of 32 bits. The data path conversion unit 5 is constructed from a group of 24 quadruple shift register chips of the type 74LS299, each 8 bits wide. There is in fact therefore a shift register present for each of the data lines of the bus 9. The control unit 25 for the data path conversion unit 5 operates in conjunction with a synchronous counter IC6a of the type 74LS169 for counting the shift operations performed and has logic for selecting the separate shift registers. The flip flop circuit IC6b connected to the counter IC6a and the control unit 25 provides buffer action for the connections to the selection unit 32. The control unit 25 is formed by so-called "parallel array logic" (PAL) components and consists of nine PAL chips of the type 16L8 manufactured by MMI and is connected to the data path conversion unit 5 as shown in the figure.

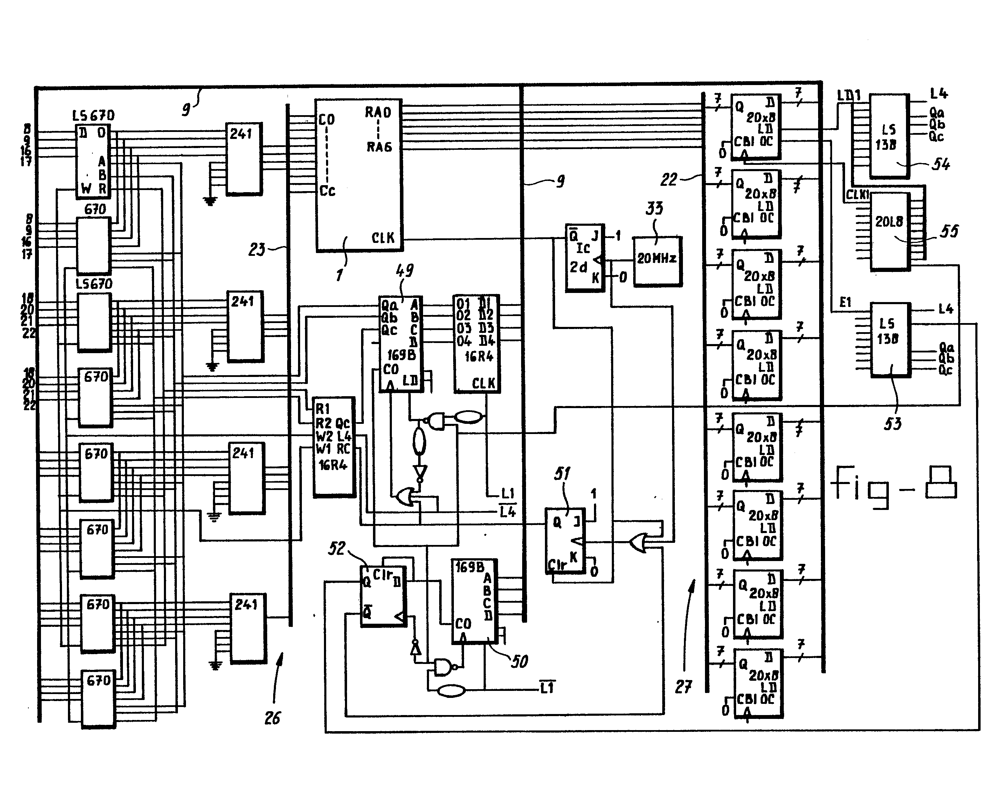

The memory unit 26 for (repeatedly) presenting instruction loops to the control inputs of the processor array 1 is shown in Figure 7A only by a block which is connected, on the one hand, to the data bus 9 and, on the other hand, to the control lines 23 to the processor array 1. A specific implementation of said memory unit is shown in Figure 8. The associated RAM addresses for the processor array are processed in latches 27, which are also shown in more detail in Figure 8.

The instructions and the data are fed to the processor array 1 and the data path conversion unit 5, the timing being controlled by a 20MHz clock 33 with buffer (flip flop) IC2d of the type 74LS74 connected to its output.

While operations are being performed, the feeding of further instructions to the memory unit 26 or latches 27 by the MC68020 processor is prevented via the status lines G01 ... G08 and the memory unit 28 consisting of two buffer/ transceiver IC6i and IC6j of the type 74LS244. N/S transfer of data through the processor array 1 is also prevented from taking place during this period by means of the separate control lines 46 as shown connected to the control unit 25. The unit 28 is connected, on the one hand, to the processor array via the status lines 24 and, on the other hand, to the data bus 9. The unit 29 into which, inter alia, the command words of the processor MC68020 are written is formed by two chips IC6i and IC6j of the type 74LS373. The data inputs of these are connected to the data bus 9. The selection unit 32, which is connected, as shown, to the separate units of the interconnection network via selection lines, is formed by a PAL component 20L10 manufactured by MMI which is connected by the address and control lines 30, 31, which are shown combined in the figure, to the corresponding outputs of the MC68020. Furthermore, the network comprises a NAND port 47 and an inverter 48 which is wired as shown in the figure. The connections to the supply voltage are indicated respectively by an arrow (positive pole) and an earthing symbol.

Figure 8 shows a specific implementation of the memory unit 26 and the latches 27, used respectively for presenting instructions and addresses to the processor array 1, which are only shown by blocks in Figure 7A. The memory unit 26 is, as shown, constructed of four pairs of so-called "register file" chips of the type 74LS670, which are each connected to the control inputs $C_0 ... C_c$ of the processor array 1 via a buffer/driver chip of the type 74LS241 by means of the control lines 23. In the register so formed, up to eight GAPP instructions can be stored.

The number of instructions and the number of times an instruction has to be presented to the processor array are stored respectively in the synchronous counters 49 and 50 of the type 74LS169 via the data bus 9. The counters are interconnected with the autonomous 20MHz clock unit 33 by means of the port circuits and flip flop 51 connected thereto. Furthermore, latches are implemented with PAL chips of the type 16R4 for achieving a suitable interconnection and synchronization between the register file chips and the data bus 9.

The components shown on the right-hand side of Figure 8 only partially connected form the latches 27 for addressing the data memories of the processor array 1. The address inputs RAO ... RA6 of the processor array are connected via the address lines 22 to eight PAL chips of the type 20X8, which are furthermore also interconnected with the data bus 9 as shown. The increasing of the address counters formed in this manner takes place via the multiplexer 54 of the type 74LS138 with the PAL component 55 of the type 20L8 interconnected therewith under the control of the counter circuit shown in the centre of the figure with the counters 49, 50. The status of this circuit (busy/not busy) is transmitted via the flip flop 52 to the multiplexer 53 of the type 74LS138 connected to the PAL chips 20X8 as indicated by the single connection shown for the purpose of synchronization. The numbers "1" and "0" next to the flip flop indicate symbolically a permanently set high or low input level. The interconnections with the selection unit 32 are not indicated.

It is obvious that this practical implementation of the interconnection network according to the present invention is not limited to chips of the types mentioned, but is pre-eminently suitable for implementation in a VLSI component together with the processor array, which produces an SIMD system which can be interconnected in a convenient manner with a processor. It is, of course, also not necessary for the processor to have a coprocessor interface. The processor then to be used may in that case, for example, be programmed in a manner such that it can emulate the protocol of a coprocessor interface, for example, such as that of the MC68020.

The hardware implementation shown of the finite-state machine may, with the exception of the memory unit 29 for the command words of the MC68020 and the selection unit 32, also be incorporated in this form in a practical implementation of the circuit according to Figure 2. As transputers, use may be made therein, inter alia, of components made by INMOS.

It is, of course, also obvious that, if use is made not of a bit-serial organized processor array but of a bit-parallel organized array, the data path conversion unit 5 and the associated control unit 25 may be omitted.

For those skilled in the art it is, of course, possible to construct other embodiments of the interconnection network, for example, optimally matched to a specific SIMD system, without departing from the inventive idea of the present invention.

## Claims

1. Interconnection network for supporting the data and control information input and output processes with a system of synchronously operating arithmetic and logic operation units, characterized in that the interconnection network comprises at least two functionally separate subnetworks, of which a first subnetwork provides at least the address operations, status-dependent decisions and process synchronization necessary for controlling the system and data transfer and of which a second subnetwork provides at least the non-status-dependent control functions including fixed instruction loops, memory addressing and the data input and output and synchronization to the system, the functions of the first subnetwork being assigned to at least one processor and the second subnetwork being formed so as to achieve as optimum a processing speed as possible by a hardware implementation of a finite-state machine.

2. Interconnection network according to Claim 1, characterized in that the subnetworks operate according to a master-slave configuration, the at least one processor functioning as master and the finite-state machine functioning as slave.

3. Interconnection network according to Claim 1 or 2, characterized in that the finite-state machine comprises a memory unit and counter unit, connected to the appropriate connections of the system, for respectively storing and, if necessary, repeatedly presenting instructions for the data processing and a latching unit for addressing the local data memories of the system, which units are programmed under the control of the at least one processor, and a memory unit for storing the status information of the system.

4. Interconnection network according to Claim 3, characterized in that the interconnection network further comprises a conversion unit for data path conversion to feed data to the system in bit-serial form and to convert the data delivered by the system to a bit-parallel representation for communication with the at least one processor or an external data memory.

5. Interconnection network according to Claims 1 to 4 inclusive, characterized in that the at least one processor is a processing unit of an MIMD system.

6. Interconnection network according to Claims 1 to 5 inclusive, characterized in that the functions of the first subnetwork are performed by a processor which has a coprocessor interface which is interconnected in a manner such that the system functions as coprocessor under the control of the at least one processor via the finite-state machine.

7. Interconnection network according to Claim 5, characterized in that the finite-state machine furthermore contains latches for processing the command words from the processor.

8. Interconnection network according to Claims 1 to 5 inclusive, characterized in that the functions of the first subnetwork are performed by two mutually interconnected transputers, the first transputer providing at least the process synchronization and the support necessary for the data processing to the second subnetwork and the second transputer supporting at least the data transfer to the second subnetwork.

9. Interconnection network according to Claim 8, characterized in that the second transputer operates together with the conversion unit for data path conversion in a manner such that the data transfer between the conversion unit and an external data memory can take place under the control of a direct memory access controller.

10. Interconnection network according to Claim 8 or 9, characterized in that the first subnetwork comprises a further transputer to support the response signals to the process instructions.

11. Interconnection network according to Claims 1 to 10 inclusive, characterized in that, in the hardware implementation of the finite-state machine for generating the necessary response signals to the processor instructions, logic circuits are used which are produced in a programmable manner from standard logic arrays.

fig-1

fig-2

Fig-2

fig-4

# 0 266 014

# fig-5

0 266 014

# fig-6

CLOCK PULSE

STATUS INFORMATION — G01--G08     CLK    CMN0 — DATA OUT
(24)

RAM ADDRESSES — RA0, RA1, RA2, RA3, RA4, RA5, RA6 (22)

CMN1, CMN2, CMN3, CMN4, CMN5 — DATA OUT (21)

ARRAY CONTROL — C0, C1, C2, C3, C4, C5, C6, C7, C8, C9, Ca, Cb, Cc (23)

CMS0, CMS1, CMS2, CMS3, CMS4, CMS5 — (20) DATA IN

Fig-7a

0 266 014

fig-7b

Fig. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | COMPUTER VISION, GRAPHICS, AND IMAGE PROCESSING, vol. 25, January 1984, pages 68-88, Academic Press, Inc., New York, US; A.P. REEVES: "Parallel computer architectures for image processing" * Page 83, last paragraph - page 84, line 26; figure 15 * | 1 | G 06 F 15/06 G 06 F 15/66 |

TECHNICAL FIELDS SEARCHED (Int. Cl.4)

G 06 F

The present search report has been drawn up for all claims

| Place of search | Date of completion of the search | Examiner |
|---|---|---|
| THE HAGUE | 06-01-1988 | WANZEELE R.J. |

EPO FORM 1503 03.82 (P0401)